# EUROPÄISCHE PATENTSCHRIFT

(11) **EP 3 763 645 B1**
(45) Veröffentlichungstag und Bekanntmachung des Hinweises auf die Patenterteilung: **30.06.2021**
(21) Anmeldenummer: 19000331.9
(22) Anmeldetag: 10.07.2019
(51) Int. Cl.: B65H 3/24, B65H 3/08, B65H 1/14, B65G 59/04

(54) **VORRICHTUNG ZUM BEARBEITEN EINES STAPELS MIT PLATTENFÖRMIGEN BAUTEILEN**
DEVICE FOR MACHINING A STACK WITH PLATE-SHAPED COMPONENTS
DISPOSITIF D'USINAGE D'UN EMPILEMENT POURVU DE COMPOSANTS EN FORME DE PLAQUE

(43) Veröffentlichungstag der Anmeldung: 13.01.2021
(73) Patentinhaber: Horstkemper Maschinenbau GmbH, 33397 Rietberg-Mastholte (DE)
(72) Erfinder: Luig, Edmund, DE- 33397 Rietberg (DE); Peitzmeier, Dirk, DE- 33397 Rietberg (DE)
(74) Vertreter: Kayser, Christoph

(56) Entgegenhaltungen:
- DE-A1- 1 628 974
- DE-A1- 2 840 677
- US-A- 3 067 885

## Beschreibung

Die vorliegende Erfindung betrifft eine Vorrichtung zum Bearbeiten eines Stapels mit plattenförmigen Bauteilen, mit einer Vereinzelungseinrichtung, mit der ein plattenförmiges Bauteil von dem Stapel abgenommen werden kann, wobei die Vereinzelungseinrichtung als Vereinzelungstraverse ausgebildet ist, die an einem mehrachsigen Handhabungsgerät in wenigstens zwei Richtungen beweglich montiert ist und eine Mehrzahl von Vereinzelungsmitteln aufweist, mit einer Hubeinrichtung zum Heben des Stapels und mit einer Steuereinrichtung zur Steuerung der Vereinzelungseinrichtung und der Hubeinrichtung, wobei die Mehrzahl von Vereinzelungsmitteln wenigstens ein erstes Vereinzelungsmittel und wenigstens ein zweites Vereinzelungsmittel aufweist, die unterschiedlich zueinander sind.

Eine solche Vorrichtung zum Bearbeiten eines Stapels mit plattenförmigen Bauteilen ist aus DE 28 40 677 A1 bekannt und wird heute in der Fertigungsindustrie bei der Fertigung von Serienprodukten, wie zum Beispiel Wohnmöbeln, Büromöbeln, Küchenmöbeln oder auch Karosserieteilen, vielfach eingesetzt. Bei der Fertigung solcher Serienprodukte werden plattenförmige Bauteile verschiedener Stärke verwendet. Die Stärken solcher plattenförmigen Bauteile können je nach Anwendung in einem Größenbereich von unter 2 mm bis über 40 mm liegen. Plattenförmige Bauteile mit Stärken unter 4 mm sind biegeweich. Die plattenförmigen Bauteile werden hergestellt und in Stapeln gelagert und transportiert. Im Rahmen der Fertigung von Serienprodukten erfolgt das Schneiden auf Maß der Kanten der plattenförmigen Bauteile innerhalb des Stapels, wodurch die einzelnen plattenförmigen Bauteile häufig durch einen Schnittgrad miteinander verbunden werden. Das erschwert eine spätere Vereinzelung.

Für die Fertigung von Serienprodukten müssen die plattenförmigen Bauteile also nach dem stapelweisen Zuschneiden aus dem Stapel vereinzelt werden. Der Weitertransport der vereinzelten plattenförmigen Bauteile erfolgt dann in der Regel über Förderstrecken zu den nächsten Fertigungseinheiten. Das kann aber auch anders gelöst sein. Für die vorliegende Erfindung kommt es auf die nachfolgende Anlagentechnik nicht weiter an.

Bei der Vereinzelung der plattenförmigen Bauteile besteht die Schwierigkeit darin, dass sich die biegeweichen bzw. dünnen plattenförmigen Bauteile mit geringer Stärke und die starren plattenförmigen Bauteile mit größerer Stärke nur auf unterschiedliche Weise vereinzeln lassen. Bei biegeweichen, dünnen plattenförmigen Bauteilen birgt das einfache Abheben des jeweils oben liegenden plattenförmigen Bauteils mithilfe eines Greifers (zum Beispiel eines Sauggreifers) die Gefahr, eines oder mehrere darunterliegende plattenförmige Bauteile gleich mit anzuheben. Diese Gefahr ist bei den dünnen oder sehr leichten plattenförmigen Bauteilen besonders groß. Auch bei porösen Werkstoffen ist bei einem Transport mit Sauggreifern die Gefahr gegeben, dass durch das oben liegende plattenförmige Bauteil hindurchgesaugt wird und dabei ein oder mehrere darunterliegende plattenförmige Bauteile mit angehoben werden. Bei glatten, luftdichten plattenförmigen Bauteilen sind die Adhäsionskräfte häufig hoch, so dass auch bei diesen die Gefahr besonders groß ist, mit einem Greifer mehrere Bauteile anzuheben.

Im Stand der Technik werden Bauteile mit größerer Stärke, also einer Stärke von 4 mm und darüber, gegen einen Anschlag mit Trennkante geschoben. Die Stapelhöhe wird anschließend über eine Steuereinrichtung so eingestellt, dass das oben liegende plattenförmige Bauteil oberhalb der Trennkannte liegt und nur das oben liegende plattenförmige Bauteil über die Trennkante geschoben werden kann. Die Einstellung erfolgt über eine Hubeinrichtung, die den Stapel entsprechend anhebt, so lange, bis das letzte plattenförmige Bauteil des Stapels aus der Stapelposition bewegt worden ist. Die unter dem jeweils oben liegenden plattenförmigen Bauteil liegenden weiteren plattenförmigen Bauteile liegen an der Trennkante an und können nicht in Richtung der Trennkante verschoben werden. Bei plattenförmigen Bauteilen geringer Stärke, also im Wesentlichen mit Stärken unter 4 mm, weist die Oberfläche des Stapels häufig Unebenheiten auf, deren topografische Höhenunterschiede größer sind als die Stärke der dünnen plattenförmigen Bauteile selbst. Bei solchen dünnen plattenförmigen Bauteilen ist das Schieben eines einzelnen plattenförmigen Bauteils über eine gerade Trennkante nicht möglich. Es lässt sich keine geeignete Höheneinstellung für den Stapel in Bezug zur Trennkante finden.

Ein oben liegendes dünnes plattenförmiges Bauteil wird daher in der Regel durch einen Greifer bzw. Sauggreifer an den Rändern hochgezogen, um dieses von den darunterliegenden dünnen plattenförmigen Bauteilen zu trennen. Durch das wenigstens teilweise Hochziehen bzw. Hochbiegen des oben liegenden dünnen plattenförmigen Bauteils kann Luft zwischen das oben liegende dünne plattenförmige Bauteil und das darunterliegende dünne plattenförmige Bauteil gelangen oder auch aktiv eingeblasen werden. Dadurch lässt sich das oben liegende dünne plattenförmige Bauteil von dem darunterliegenden dünnen plattenförmigen Bauteil abheben, ohne dass ein oder mehrere darunterliegende dünne plattenförmige Bauteile daran hängen bleiben. Zudem wird dadurch auch ein durch den Schnittgrad entstehender Widerstand überwunden.

Der Nachteil der Vorrichtung und des Verfahrens des Standes der Technik ist, dass unterschiedliche Vorrichtungen für dünne plattenförmige Bauteile und dicke plattenförmige Bauteile vorgesehen sein müssen. Da das Problem des Aneinanderhaftens von mehreren plattenförmigen Bauteilen nicht ausschließlich etwas mit der Stärke zu tun haben muss, sondern im Falle von porösen und permeablen Werkstoffen auch dickere plattenförmige Bauteile betreffen kann, soll im Kontext der vorliegenden Erfindung der Unterschied in der Vereinzelbarkeit durch eine "vorbestimmte erste Eigenschaft" und eine "vorbestimmte zweite Eigenschaft" zum Ausdruck gebracht werden. Die "vorbestimmte erste Eigenschaft" umfasst z.B. Luftundurchlässigkeit oder Luftdurchlässigkeit und Stärken von > 4 mm und Biegefestigkeit, die "vorbestimmte zweite Eigenschaft" umfasst z.B. Luftundurchlässigkeit und Stärken von ≤ 4 mm und Biegeweichheit.

Die Aufgabe der vorliegenden Erfindung ist, eine Vorrichtung der eingangs genannten Gattung derart weiterzubilden, dass mit dieser sowohl plattenförmige Bauteile mit der vorbestimmten ersten Eigenschaft als auch mit der vorbestimmten zweiten Eigenschaft aus einem Stapel heraus vereinzelt werden können.

Die Aufgabe wird erfindungsgemäß dadurch gelöst, dass die Steuereinrichtung das wenigstens eine erste Vereinzelungsmittel ansteuert, wenn ein im Stapel obenliegendes erstes plattenförmiges Bauteil mit einer vorbestimmten ersten Eigenschaft vereinzelt werden soll, und das wenigstens eine zweite Vereinzelungsmittel ansteuert, wenn ein im Stapel obenliegendes erstes plattenförmiges Bauteils mit einer vorbestimmten zweiten Eigenschaft vereinzelt werden soll, wobei sich die vorbestimmte zweite Eigenschaft von der vorbestimmten ersten Eigenschaft unterscheidet.

Mit der vorliegenden Erfindung ist es möglich, mehrere Vereinzelungsmittel oberhalb eines Stapels zu vereinzelnder plattenförmiger Bauteile anzuordnen, die über eine Steuereinrichtung wahlfrei angesteuert werden können, um jeweils ein oben liegendes plattenförmiges Bauteil des Stapels aus dem Stapel heraus zu vereinzeln. Dabei können die jeweiligen Vereinzelungsmittel so ausgebildet sein, dass diese in Abhängigkeit von einer vorbestimmten ersten oder zweiten Eigenschaft des zu vereinzelnden und jeweils im Stapel oben liegenden plattenförmigen Bauteils angesteuert werden.

Ein weiterer Vorteil der vorliegenden Erfindung ist, dass die Mehrzahl von Vereinzelungsmitteln wenigstens ein erstes Vereinzelungsmittel und wenigstens ein zweites Vereinzelungsmittel aufweist, die unterschiedlich zueinander sind, wobei die Steuereinrichtung das wenigstens eine erste Vereinzelungsmittel ansteuert, wenn ein im Stapel oben liegendes erstes plattenförmiges Bauteil mit einer vorbestimmten ersten Eigenschaft vereinzelt werden soll, und das wenigstens eine zweite Vereinzelungsmittel ansteuert, wenn ein im Stapel oben liegendes erstes plattenförmiges Bauteil mit einer vorbestimmten zweiten Eigenschaft vereinzelt werden soll, wobei sich die vorbestimmte zweite Eigenschaft von der vorbestimmten ersten Eigenschaft unterscheidet. Mit dieser Konstruktion ist es möglich, zum Beispiel das erste Vereinzelungsmittel für dicke Platten, jeweils mit glatten Oberflächen, und das zweite Vereinzelungsmittel für dünne biegeweiche Platten einzusetzen. Zudem mit der vorliegenden Erfindung auch nicht sortenreine Stapel aus plattenförmigen Bauteilen mit vorbestimmter erster und zweiter Eigenschaft vereinzelt werden.

Ein weiterer Vorteil der vorliegenden Erfindung ist, dass das wenigstens eine erste Vereinzelungsmittel eine Abschiebeeinheit ist, die an der Vereinzelungseinrichtung absenkbar gelagert ist und eine Abschiebekante aufweist, die in einer Arbeitsposition an einer ersten Plattenkante des zu vereinzelnden oben liegenden ersten plattenförmigen Bauteils mit erster Eigenschaft anliegt. Durch die Steuereinrichtung kann die an der ersten Plattenkante anliegende Abschiebekante das oben liegende erste plattenförmige Bauteil vor sich herschieben, wenn die Bewegung der Vereinzelungseinrichtung in x-Richtung gesteuert wird.

Ein weiterer Vorteil der vorliegenden Erfindung ist, dass das wenigstens eine erste Vereinzelungsmittel in der Arbeitsposition vertikal federnd gelagert ist. Da durch einen Anpressdruck des ersten Vereinzelungsmittels an das oben liegende erste plattenförmige Bauteil auch unter Berücksichtigung von Maßtoleranzen des plattenförmigen Bauteils materialschonend aufgebracht werden kann.

Ein weiterer Vorteil der vorliegenden Erfindung ist, dass eine Trennkante an einer zweiten Plattenkante des zu vereinzelnden oben liegenden ersten plattenförmigen Bauteils angeordnet ist, wobei die Steuereinrichtung die Hubeinrichtung derart steuert, dass sich die Trennkante unterhalb der zweiten Plattenkante des zu vereinzelnden oben liegenden ersten plattenförmigen Bauteils befindet. Dadurch ist es möglich, dass jeweils nur das zu vereinzelnde oben liegende erste plattenförmige Bauteil mit der Abschiebekante über die Trennkante geschoben werden kann, wenn die Vereinzelungseinrichtung zu einer Bewegung in x-Richtung und in einer Arbeitsposition des ersten Vereinzelungsmittels gesteuert wird.

Ein weiterer Vorteil der vorliegenden Erfindung ist, dass das wenigstens eine zweite Vereinzelungsmittel eine Abschiebeeinheit ist, die an der Vereinzelungseinrichtung absenkbar gelagert ist und einen Greifer aufweist, der in einer Arbeitsposition an einen Bereich einer Oberseite des zu vereinzelnden oben liegenden ersten plattenförmigen Bauteils mit zweiter Eigenschaft in der Nähe einer ersten Plattenkante angreift. Mit dieser Konstruktion kann ein und dieselbe Vereinzelungseinrichtung zum Beispiel für biegeweiche dünne Platten oder Platten mit einer Eigenschaft, die ein Anhaften der oben liegenden ersten Platte an einer darunterliegenden Platte möglich macht, vereinzelt werden. Ein solches oben liegendes erstes plattenförmiges Bauteil wird also nicht wie mit dem ersten Vereinzelungsmittel an einer ersten Plattenkante angegriffen, sondern an einem Bereich einer Oberseite des zu vereinzelnden oben liegenden ersten plattenförmigen Bauteils in der Nähe der ersten Plattenkante. Dadurch wird es möglich, das oben liegende erste plattenförmige Bauteil nicht nur in der x-Richtung, sondern wenigstens teilweise auch in der z-Richtung zu bewegen.

Ein weiterer Vorteil der vorliegenden Erfindung ist, dass der Greifer beweglich zwischen einer ersten Greifstellung und einer zweiten Greifstellung angeordnet ist. Die Arbeitsposition des Greifers umfasst also eine ausgefahrene Greifstellung und eine eingefahrene Greifstellung, so dass der Greifer das zu vereinzelnde oben liegende erste plattenförmige Bauteil wenigstens aus der ersten Greifstellung in z-Richtung bis in die eingefahrene Greifstellung mitnehmen kann. Dadurch wird das zu vereinzelnde oben liegende erste plattenförmige Bauteil wenigstens im Bereich der Angriffsstelle des Greifers nach oben gebogen, so dass Luft zwischen das zu vereinzelnde oben liegende erste plattenförmige Bauteil und ein darunterliegendes zweites plattenförmiges Bauteils gelangen kann. Außerdem kann eine durch einen Schnittgrad entstandene Verbindung zwischen dem oben liegenden ersten plattenförmigen Bauteil und einem darunterliegenden zweiten plattenförmigen Bauteil getrennt werden.

Ein weiterer Vorteil der vorliegenden Erfindung ist, dass das wenigstens eine zweite Vereinzelungsmittel eine Anschlagkante aufweist, an welche die erste Plattenkante des zu vereinzelnden oben liegenden ersten plattenförmigen Bauteils anschlagen kann, wenn der Greifer in der ersten Greifstellung an den Bereich des zu vereinzelnden oben liegenden ersten plattenförmigen Bauteils angreift und sich in die eingefahrene Greifstellung bewegt. Dadurch wird sichergestellt, dass die erste Plattenkante in Bezug zu dem Greifer bei einer Bewegung in z-Richtung nicht auch in x-Richtung verschoben ist, wenn die eingefahrene Greifstellung erreicht ist. Dies gewährleistet die genaue Ausrichtung des oben liegenden ersten plattenförmigen Bauteils auch in angehobener Position, also nach einer Bewegung in z-Richtung.

Schließlich ist auch von Vorteil, dass das wenigstens eine zweite Vereinzelungsmittel eine Andruckrolle aufweist, die an ein unter dem zu vereinzelnden oben liegenden ersten plattenförmigen Bauteil liegendes und nicht zu vereinzelndes zweites plattenförmiges Bauteil drückt, wenn der Greifer an den Bereich des zu vereinzelnden oben liegenden ersten plattenförmigen Bauteils angreift und sich in der zweiten Greifstellung befindet. Diese mechanische Hilfe unterstützt die Trennung des zu vereinzelnden oben liegenden ersten plattenförmigen Bauteils von einem darunterliegenden zweiten plattenförmigen Bauteil. Nach Lösung des zu vereinzelnden oben liegenden ersten plattenförmigen Bauteils kann die Steuereinrichtung eine Bewegung der Vereinzelungseinrichtung in x-Richtung steuern. Das oben liegende erste plattenförmige Bauteil wird dann in x-Richtung über die Trennkante geschoben.

Ein weiterer Vorteil der vorliegenden Erfindung ist, dass in der Anschlagkante wenigstens eine Luftdüse zur Abgabe von Luft zwischen das oben liegende erste plattenförmige Bauteil und das darunterliegende zweite plattenförmige Bauteil eingebaut ist. Dadurch kann die wenigstens teilweise Trennung des oben liegenden ersten plattenförmigen Bauteils vom darunterliegenden zweiten plattenförmigen Bauteil unterstützt werden.

Schließlich ist auch ein Vorteil, dass das wenigstens eine zweite Vereinzelungsmittel eine Andruckrolle aufweist, die an ein unter dem zu vereinzelnden oben liegenden ersten plattenförmigen Bauteil liegendes und nicht zu vereinzelndes zweites plattenförmiges Bauteil drückt, wenn der Greifer an den Bereich des zu vereinzelnden oben liegenden ersten plattenförmigen Bauteils angreift und sich in der zweiten Greifstellung befindet. Durch die Andruckrolle wird ein Verrutschen des zweiten plattenförmigen Bauteils durch eine erhöhte Andruckkraft verhindert.

Eine Ausführungsform der vorliegenden Erfindung wird im Folgenden anhand der Zeichnungen näher beschrieben. Es zeigen:
Fig. 1 eine perspektivische Ansicht der erfindungsgemäßen Vorrichtung zum Bearbeiten eines Stapels mit plattenförmigen Bauteilen, in der ein solcher Stapel bereitgestellt ist;
Fig. 2 eine Seitenansicht einer Vereinzelungseinrichtung gemäß vorliegender Erfindung;
Fig. 3 eine perspektivische Ansicht der Vereinzelungseinrichtung aus Fig. 2, mit der Vereinzelungseinrichtung und dem ersten Vereinzelungsmittel in einer Position während eines Vereinzelungsvorganges;
Fig. 4 eine Seitenansicht der Vorrichtung aus Fig. 1, mit der Vereinzelungseinrichtung aus Fig. 3 in einer Position zu Beginn eines Vereinzelungsvorgangs einer obenliegenden dicken Platte;
Fig. 5 eine Seitenansicht der Vorrichtung aus Fig. 1, mit der Vereinzelungseinrichtung aus Fig. 3 in einer Position nach der Situation aus Fig. 4;
Fig. 6 eine Seitenansicht der Vorrichtung aus Fig. 1, mit der Vereinzelungseinrichtung aus Fig. 3 in einer Position nach der Situation in Fig.5;
Fig. 7 eine Seitenansicht der Vereinzelungseinrichtung aus Fig. 2, mit der Vereinzelungseinrichtung und dem zweiten Vereinzelungsmittel in einer Position vor einem Vereinzelungsvorgang;
Fig. 8 eine Seitenansicht der Vereinzelungseinrichtung aus Fig. 2, mit der Vereinzelungseinrichtung und dem zweiten Vereinzelungsmittel in einer Position zu Beginn eines Vereinzelungsvorgangs vor einer Ausrichtung der obenliegenden Platte;
Fig. 9 eine Seitenansicht der Vereinzelungseinrichtung aus Fig. 2, mit der Vereinzelungseinrichtung und dem zweiten Vereinzelungsmittel in einer Position zu Beginn eines Vereinzelungsvorgangs nach der Ausrichtung in Fig. 8;
Fig. 10 eine Seitenansicht der Vereinzelungseinrichtung aus Fig. 2, mit der Vereinzelungseinrichtung und dem zweiten Vereinzelungsmittel in einer Position zu Beginn eines Vereinzelungsvorgangs nach der Situation in Fig. 9;
Fig. 11 eine Seitenansicht der Vereinzelungseinrichtung aus Fig. 2, mit der Vereinzelungseinrichtung und dem zweiten Vereinzelungsmittel in einer Position zu Beginn eines Vereinzelungsvorgangs nach der Situation in Fig. 10;
Fig. 12 eine Seitenansicht der Vereinzelungseinrichtung aus Fig. 2, mit der Vereinzelungseinrichtung und dem zweiten Vereinzelungsmittel in einer Position zu Beginn eines Vereinzelungsvorgangs nach der Situation in Fig. 11;
Fig. 13 eine Seitenansicht der Vereinzelungseinrichtung aus Fig. 2, mit der Vereinzelungseinrichtung und dem zweiten Vereinzelungsmittel in einer Position zu Beginn eines Vereinzelungsvorgangs nach der Situation in Fig. 12.
Fig. 14 eine Seitenansicht der Vereinzelungseinrichtung aus Fig. 2, mit der Vereinzelungseinrichtung und dem zweiten Vereinzelungsmittel in einer Position zu Beginn eines Vereinzelungsvorgangs nach der Situation in Fig. 13.

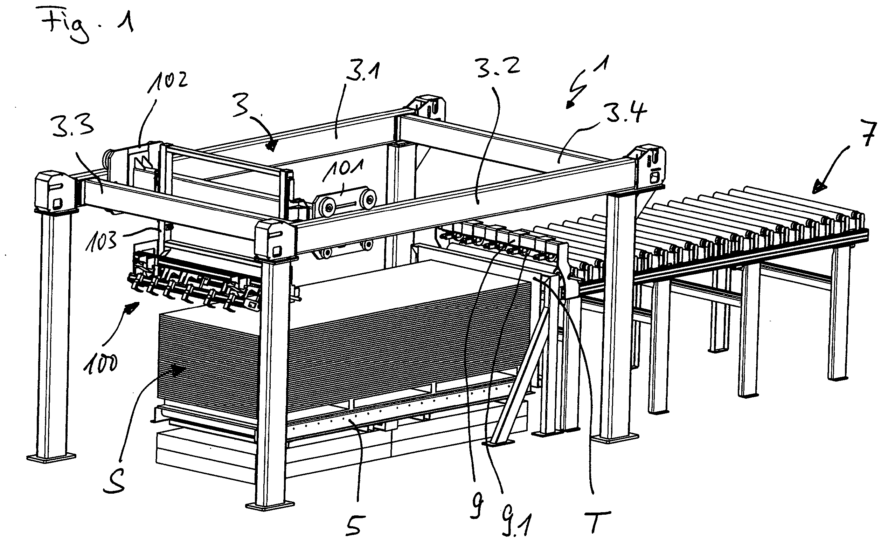

Fig. 1 zeigt eine perspektivische Darstellung einer Vorrichtung 1 zum Bearbeiten eines Stapels S mit plattenförmigen Bauteilen S1 und/oder S2, in welcher ein solcher Stapel S zur Bearbeitung bereitgestellt ist. Die Vorrichtung 1 umfasst ein mehrachsiges Handhabungsgerät 3, das in der vorliegenden Ausführungsform als Zwei-Achsportal mit einer Bewegungsachse in X-Richtung und mit einer Bewegungsachse in Z-Richtung ausgebildet ist. In anderen Ausführungsformen kann das mehrachsige Handhabungsgerät 3 aber auch als ein Portal mit mehr als zwei Achsen ausgebildet sein. Das mehrachsige Handhabungsgerät 3 umschließt einen Raum, in dem der Stapel S mit einer Mehrzahl plattenförmiger Bauteile S1 und/oder S2 zur Bearbeitung angeordnet werden kann. Das mehrachsige Handhabungsgerät 3 umfasst auch eine Hubeinrichtung 5, auf welcher der Stapel S zur Bearbeitung angeordnet wird. Die Hubeinrichtung 5 kann sich in Z-Richtung bewegen. Eine Steuereinrichtung (nicht dargestellt) steuert die Vorrichtung 1. Die Steuereinrichtung ist Teil eines Rechnersystems und programmierbar. In der vorliegenden Ausführungsform steuert die Steuereinrichtung wenigstens die Hubeinrichtung 5 derart, dass sich diese in Abhängigkeit von einer Stapelhöhe hebt oder senkt. Eine solche Steuerung ist üblicherweise an bestimmte Arbeitsabläufe angepasst und entsprechend programmiert. Der Stapel S wird vor seiner Bearbeitung mithilfe von an sich bekannten Fördermitteln auf der Hubeinrichtung 5 platziert.

Die Vorrichtung 1 vereinzelt die plattenförmigen Bauteile S1 oder S2 aus dem Stapel S, so dass sich an die Vorrichtung 1 eine Fördereinrichtung 7 anschließt, zum Beispiel ein angetriebener Rollengang, über welchen das in der Vorrichtung 1 vereinzelte plattenförmige Bauteil S1 oder S2 zur weiteren Bearbeitung abgefördert werden kann.

An dem mehrachsigen Handhabungsgerät 3 ist oberhalb des Stapels S eine Vereinzelungseinrichtung 100 angebracht, die sich in dem mehrachsigen Handhabungsgerät 3 in x-Richtung bewegen kann. Zu diesem Zweck ist die Vereinzelungseinrichtung 100 mit einem ersten Schlitten 101 und einem zweiten Schlitten 102 an jeweils einem Längsbalken 3.1, 3.2 des mehrachsigen Handhabungsgeräts 3 beweglich abgestützt. Die bewegliche Abstützung erfolgt in der vorliegenden Erfindung durch Rollen, kann aber auch anders gelöst sein. In der dargestellten Ausführungsform erstreckt sich die Vereinzelungseinrichtung 100 als Vereinzelungstraverse parallel zu einem Querbalken 3.3, 3.4 des mehrachsigen Handhabungsgeräts 3, also quer zur x-Richtung. Am Übergang zwischen dem mehrachsigen Handhabungsgerät 3 und der Fördereinrichtung 7 ist eine Einzugswalze 9 mit Andruckwalzen 9.1 ausgebildet, um ein vereinzeltes plattenförmiges Bauteil S1 oder S2 lagestabil auf der Fördereinrichtung 7 zu positionieren und von dieser abfördern zu lassen.

Im Kontext der vorliegenden Beschreibung werden plattenförmige Bauteile mit S1 bezeichnet, wenn diese eine Stärke (Dicke) von 4 mm oder größer aufweisen, und mit S2 bezeichnet, wenn diese Stärken unter 4 mm aufweisen und biegeweich sind. Alternativ werden plattenförmige Bauteile S1 gelegentlich auch als "dicke Platten" und plattenförmige Bauteile S2 als "dünne Platten" bezeichnet. Die als Grenze für diese Bezeichnung definierte Stärke von 4 mm erfolgt im Rahmen der vorliegenden Erfindung, um die in Abhängigkeit von der Plattenstärke auftretenden Probleme deutlich zu machen. Die hier gewählte Grenze von 4 mm als Grenze zwischen dünnen Platten und dicken Platten kann aber in Abhängigkeit von dem Material der Platten auch erst bei geringeren Stärken oder schon bei größeren Stärken als 4 mm getroffen werden. Der Fachmann wird je nach Anwendung erkennen können, bei welcher Stärke ein plattenförmiges Bauteil so biegeweich wird, dass dieses zu der Gruppe dünner Platten zu zählen ist. Die mit dünnen und dicken Platten verbundene spezielle Problematik, unterschiedliche Vereinzelungsmaßnahmen ergreifen zu müssen, kann auch bei anderen "besonderen Eigenschaften" der plattenförmigen Bauteile S1 oder S2 auftreten, so dass die vorliegende Erfindung nicht auf die unterschiedliche Vereinzelung dicker und dünner Platten mit ein und derselben Vorrichtung beschränkt ist. Die vorliegende Erfindung ermöglicht eine entsprechend an diese "besonderen Eigenschaften" angepasste Vereinzelungseinrichtung einzusetzen. Insofern ist die in Verbindung mit der unterschiedlichen Stärke beschriebene besondere Eigenschaft nur ein Beispiel für eine Mehrzahl möglicherweise vorliegender besonderer Eigenschaften.

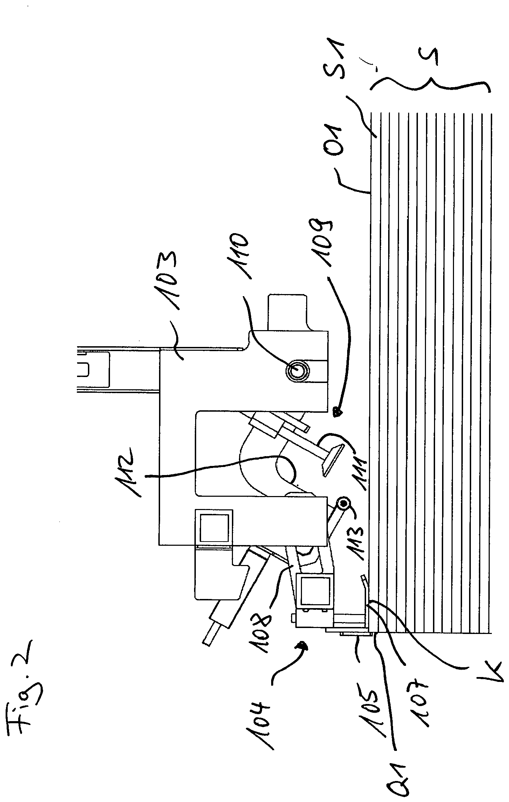

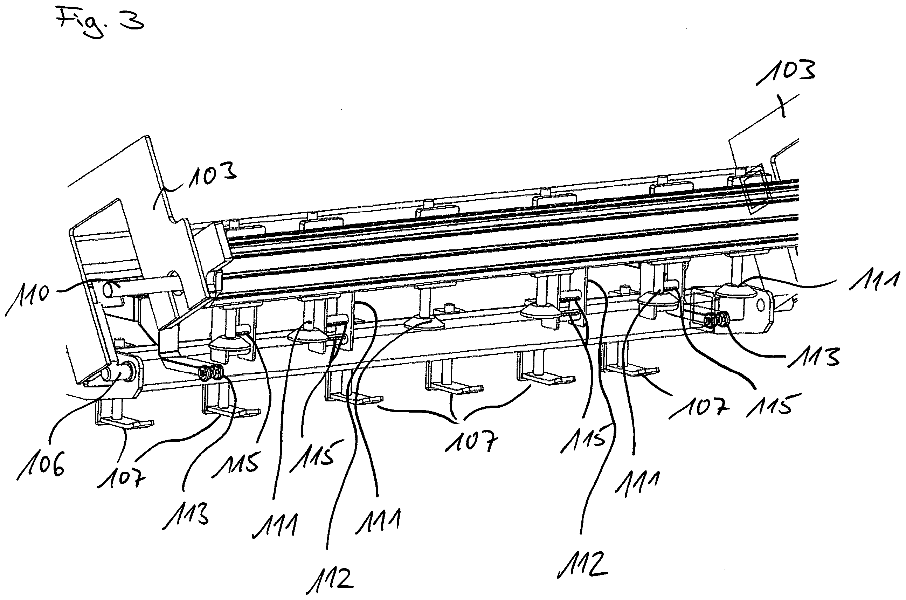

In Fig. 2 ist die Vereinzelungseinrichtung 100 aus Fig. 1 in einer Seitenansicht dargestellt. Die Vereinzelungseinrichtung 100 befindet sich in ihrer durch die Steuereinrichtung (nicht dargestellt) bestimmte Position am Anfang eines Vereinzelungsschritts zum Vereinzeln eines plattenförmigen Bauteils S1, also im vorliegenden Fall einer "dicken Platte". Die Vereinzelungseinrichtung 100 ist oben an dem mehrachsigen Handhabungsgerät 3 in x-Richtung bewegbar abgestützt. Mit den Schlitten 101 und 102 ist eine Trägereinrichtung 103 verbunden, an der ein erstes Vereinzelungsmittel 104 schwenkbar angeordnet ist. Eine dem ersten Vereinzelungsmittel 104 zugeordnete erste Schwenkachse 106 (Fig. 3) verläuft quer zu der Vereinzelungsrichtung 100 (hier: quer zur x-Richtung). Das erste Vereinzelungsmittel 104 weist eine Abschiebekante 105 auf, die in der in Fig. 2 dargestellten Position am Anfang eines Vereinzelungsvorgangs an einer ersten Querkante Q1 des plattenförmigen Bauteils S1 anliegt. Das erste Vereinzelungsmittel 104 weist auch einen Aufsatzschuh 107 auf, der an einem Stützelement 108 des ersten Vereinzelungsmittels 104 angebracht ist und in der in Fig. 2 dargestellten Position auf einer Oberseite O1 am Kantenbereich K des plattenförmigen Bauteils S1 aufliegt. In der dargestellten Ausführungsform ist der Aufsetzschuh 107 an dem Stützelement 108 des ersten Vereinzelungsmittels 104 federnd gelagert, so dass der Aufsetzschuh 107 leichte Unebenheiten aufgrund von Maßtoleranzen an der Oberseite O1 des oben liegenden plattenförmigen Bauteils S1 nachgeben kann. Die Federung kann beliebig ausgebildet sein.

Die Vereinzelungseinrichtung 100 umfasst auch ein zweites Vereinzelungsmittel 109, das zur Vereinzelung von plattenförmigen Bauteilen S2 vorgesehen ist und sich daher in Fig. 2 in einer in Bezug zu dem oben liegenden plattenförmigen Bauteil S2 entfernten Position befindet. Der Aufbau und die Funktion des zweiten Vereinzelungsmittels 109 wird weiter unten in Verbindung mit der Vereinzelung eines plattenförmigen Bauteils S2 näher beschrieben.

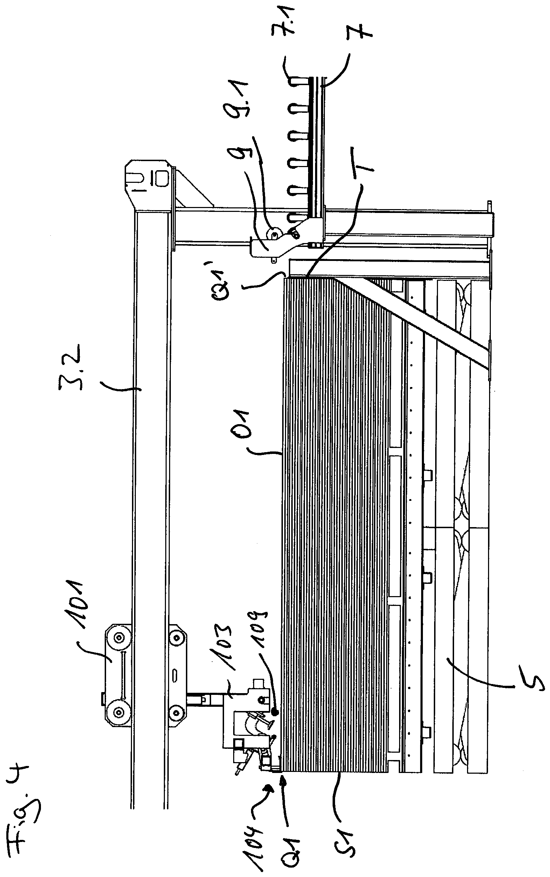

In Fig. 3 ist die Vereinzelungseinrichtung 100 perspektivisch dargestellt und zeigt, dass über der Querkante Q1 des Stapels S (siehe auch Fig. 1) eine Mehrzahl von ersten Vereinzelungsmitteln 104 und zweiten Vereinzelungsmitteln 109 in Reihe angeordnet sind. In den Figuren 4, 5 und 6 werden drei aufeinander folgende Situationen eines Vereinzelungsvorgangs in Bezug auf ein plattenförmiges Bauteil S1 (hier: dicke Platte) dargestellt. In Fig. 4 befindet sich die Vereinzelungseinrichtung 100 in der in Fig. 2 dargestellten Anfangsposition. Die Steuereinrichtung (nicht dargestellt) hat bewirkt, dass die Vereinzelungseinrichtung 100 in diese Position gefahren ist. Die Abschiebekante 105 liegt auf der linken Seite in Fig. 4 an der ersten Querkante Q1 des oben liegenden plattenförmigen Bauteils S1 an. Die gegenüberliegende zweite Querkante Q1' des oben liegenden plattenförmigen Bauteils S1 liegt oberhalb einer Trennkante T frei. Die Steuereinrichtung (nicht dargestellt) hat bewirkt, dass sich die Hubeinrichtung 5 nach oben in eine Position bewegt, hat, in welcher das obenliegende plattenförmige Bauteil S1 oberhalb der Trennkante T zu liegenkommt.

An diesem, der Vereinzelungseinrichtung 100 entgegengesetzten Ende des Stapels S stoßen alle unter dem obenliegenden plattenförmigen Bauteil S1 liegenden plattenförmigen Bauteile an der Trennkante T an. Die Steuereinrichtung (nicht dargestellt) steuert also nicht nur die Vereinzelungseinrichtung 100, sondern wenigstens auch die Hubeinrichtung 5 und die Fördereinrichtung 7, wobei der Stapel S immer nach Beendigung eines Vereinzelungsvorgangs des oben liegenden plattenförmigen Bauteils S1 den Stapel S so weit anhebt, dass das nachfolgend zu vereinzelnde nunmehr oben liegende plattenförmige Bauteil S1 oberhalb der Trennkante T angeordnet ist und somit an dieser Querkante Q1' freiliegt.

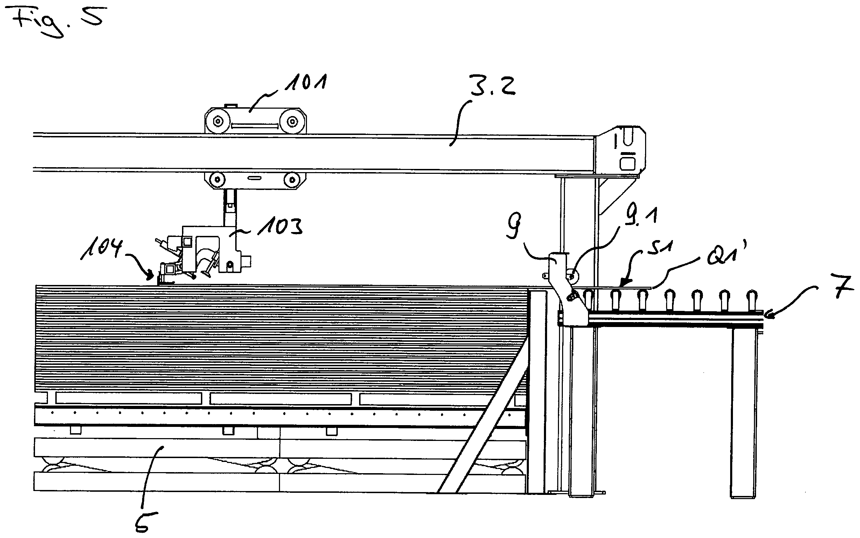

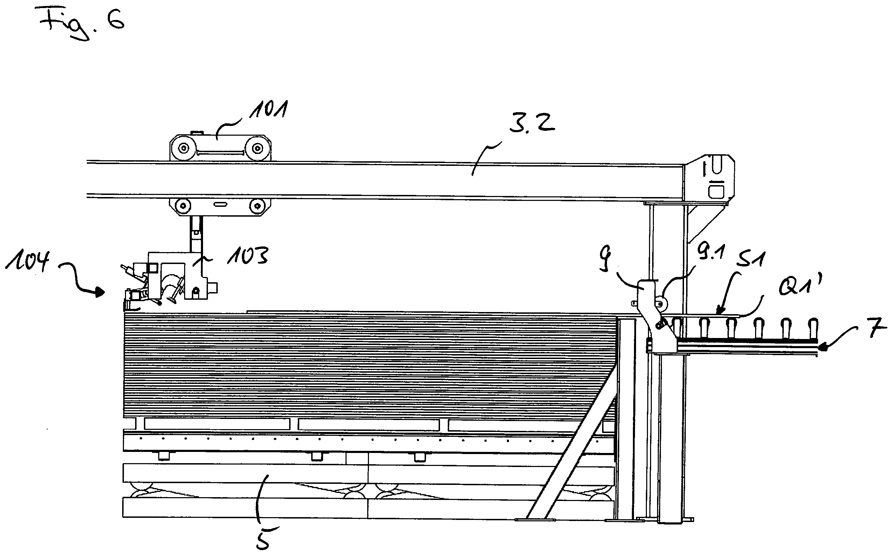

In Fig. 5 hat die Steuereinrichtung (nicht dargestellt) die Vereinzelungseinrichtung 100 mithilfe der Schlittens 101, 102 nach rechts bewegt, so dass die Abschiebekante 105 das oben liegende plattenförmige Bauteil S1 über die Trennkante T und durch die Einzugswalze 9 mit Andruckwalzen 9.1 hindurch auf die Fördereinrichtung 7 in dem Maße verschoben hat, wie sich die Vereinzelungseinrichtung 100 bis dahin (Position in Fig. 5) bewegt hat. Die selbst angetriebene Fördereinrichtung 7 übernimmt die Förderung des bis dahin in x-Richtung verschobenen, oben liegenden plattenförmigen Bauteils S1 und zieht dieses weiter vom Stapel S in x-Richtung ab, solange, bis das oben liegende plattenförmige Bauteil S1 vollständig vom Stapel S entfernt ist. Da der Vereinzelungsvorgang im Anschluss an die in Fig. 5 dargestellte Situation von der Fördereinrichtung 7 selbsttätig vollendet wird, bewirkt die Steuereinrichtung (nicht dargestellt), dass sich die Vereinzelungseinrichtung 100 wieder zurück in die in Fig. 6 dargestellte Position bewegt. Sobald das oben liegende plattenförmige Bauteil S1 von der Fördereinrichtung 7 vollständig vom Stapel S abgezogen worden ist, steuert die Steuereinrichtung (nicht dargestellt) die Hubeinrichtung 5 derart, dass sich der Stapel S hebt und der Aufsetzschuh 107 des ersten Vereinzelungsmittels 104 an der Oberseite O1 des nächsten oben liegenden plattenförmigen Bauteils S1 anliegt. Auf diese Weise erfolgt dann nacheinander die Vereinzelung aller in einem Stapel S angeordneten plattenförmigen Bauteile S1.

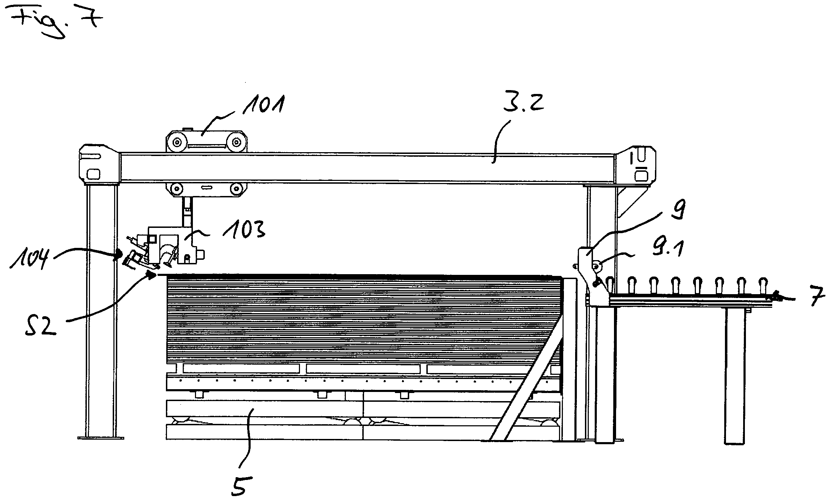

In Fig. 7 bis Fig. 14 ist ein Vereinzelungsvorgang eines plattenförmigen Bauteils S2, also einer dünnen Platte, in aufeinander folgenden Situationen gezeigt. In Bezug auf die Vereinzelung des plattenförmigen Bauteils S2 wird noch einmal auf Fig. 2 verwiesen. Das zweite Vereinzelungsmittel 109 ist an einer zweiten Schwenkachse 110 der Vereinzelungseinrichtung 100 angebracht, die parallel zur ersten Schwenkachse verläuft. Das zweite Vereinzelungsmittel 109 umfasst eine Greifeinrichtung 111, die im vorliegenden Fall ein Sauggreifer ist. In anderen Ausführungsformen könnte die Greifeinrichtung 111 aber auch zum Beispiel als Magnet oder ganz anders ausgebildet sein. Die Greifeinrichtung 111 ist verschiebbar an dem zweiten Vereinzelungsmittel 109 angebracht, so dass diese ein- und ausfahrbar ist. Die Steuerung dieser Bewegung erfolgt wieder über die Steuereinrichtung (nicht dargestellt). So kann sich die Greifeinrichtung 111 in eine eingefahrene erste Greifstellung und eine ausgefahren zweite Greifstellung bzw. umgekehrt bewegen. Das zweite Vereinzelungsmittel 109 weist zudem eine Anschlagkante 112 auf, mit der ein plattenförmiges Bauteil S2 ausgerichtet werden kann. Zudem weist das zweite Vereinzelungsmittel 109 eine Andruckrolle 113 auf, die ebenfalls einfahrbar und ausfahrbar ausgebildet ist und deren Bewegung durch die Steuereinrichtung gesteuert wird.

In der in Fig. 7 dargestellten Situation befindet sich das oben liegende plattenförmige Bauteil S2 in einem nicht sorgfältig ausgerichteten Zustand. Dieses oben liegende plattenförmige Bauteil S2 hat sich beim Bereitstellen des Stapels S ein wenig nach links über die Querkanten der weiteren plattenförmigen Bauteile S2 des Stapels S hinaus verschoben. Vor einer Vereinzelung des oben liegenden plattenförmigen Bauteils S2 muss dieses also wieder ausgerichtet werden.

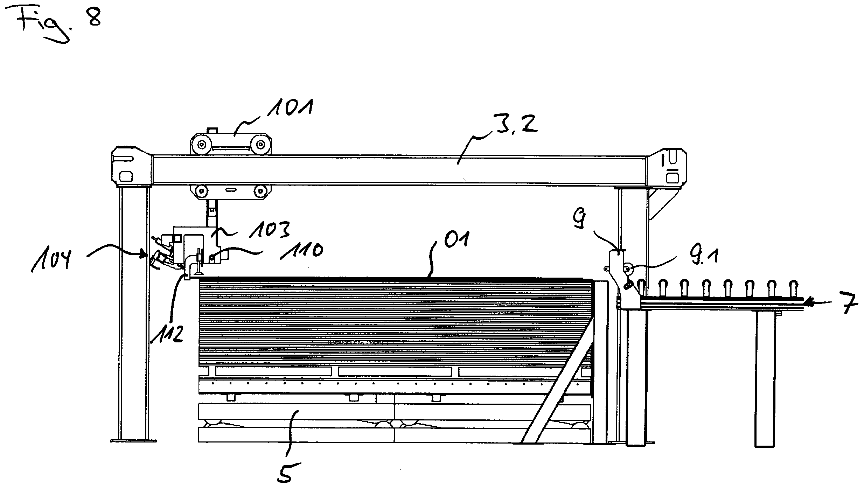

In Fig. 8 ist eine Situation nach der Situation in Fig. 7 dargestellt. Das zweite Vereinzelungsmittel 109 hat sich um die zweite Schwenkachse 110 gedreht und derart abgesenkt, dass die Anschlagkante 112 an der nach links verrutschten Querkante Q1 des oben liegenden plattenförmigen Bauteils S2 anliegt.

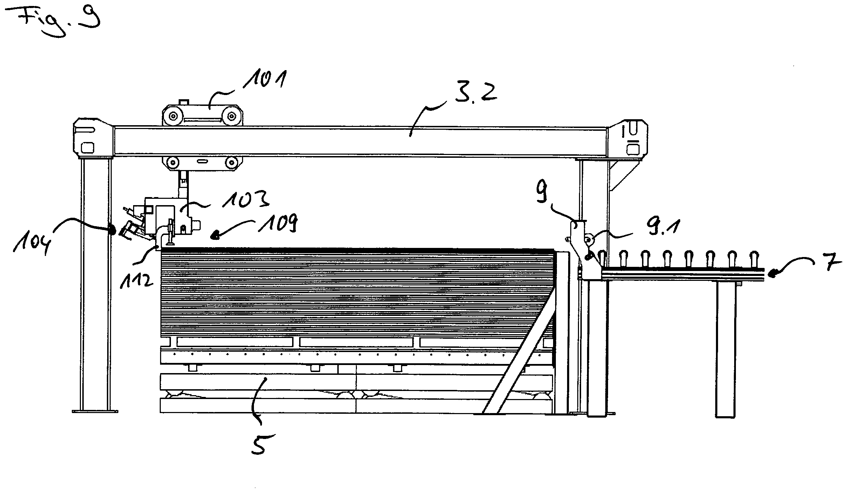

In Fig. 9 ist eine Situation der Vorrichtung 1 nach der in Fig. 8 dargestellten Situation gezeigt. Die Steuereinrichtung hat die Vereinzelungseinrichtung 100 ein wenig nach rechts bewegt, so dass die Anschlagkante 112 im Angriff an die Querkante Q1 des seitlich verrutschten, oben liegenden plattenförmigen Bauteils S2 dieses nach rechts soweit verschoben hat, dass diese oberste Querkante Q1 wieder bündig mit der Stapelkante (allen Querkanten Q1 im Stapel S) des Stapels S ausgerichtet hat.

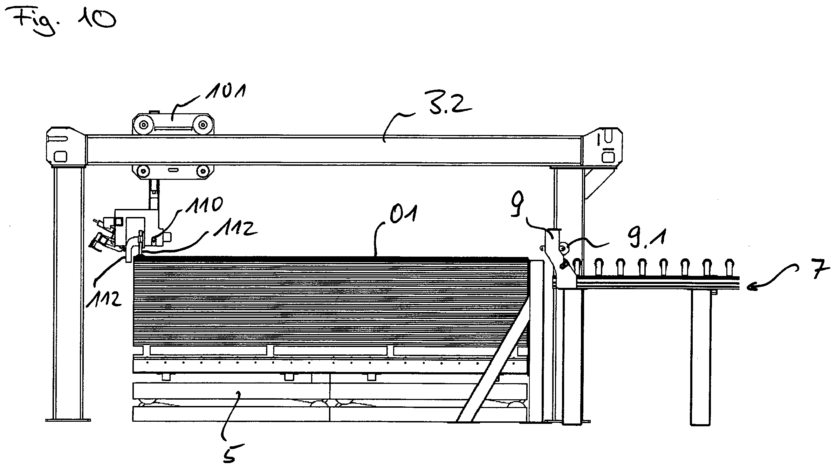

Nach dieser Situation wird, wie in Fig. 10 dargestellt, die Vereinzelungseinrichtung 100 wieder ein wenig links bewegt, so dass die Anschlagkante 112 von dem Stapel S gelöst ist und diesen freimacht. Die Greifeinrichtung 111 wird über die Steuereinrichtung so bewegt, dass diese im Kantenbereich K an die Oberseite O1 des oben liegenden plattenförmigen Bauteils S2 angreift.

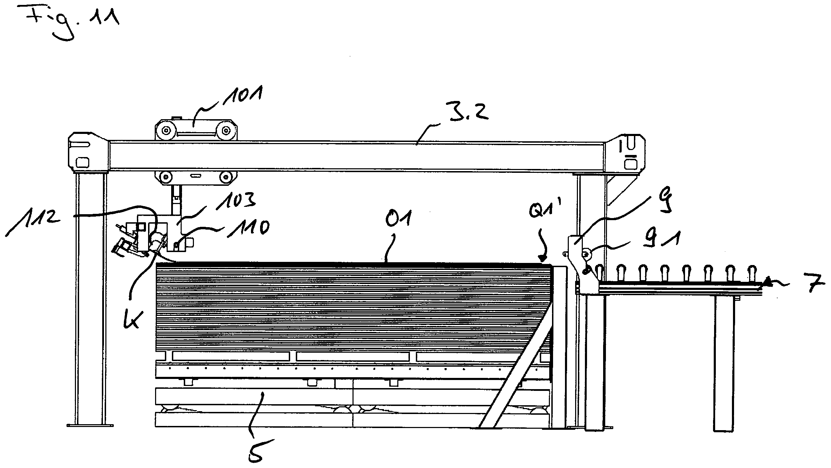

In Fig. 11 wird das zweite Vereinzelungsmittel um die zweite Schwenkachse 110 nach oben geschwenkt, so dass die Greifeinrichtung 111 das oben liegende plattenförmige Bauteil S2 ein wenig nach links und nach oben vom Stapel S abzieht. In dieser Situation wird durch Luftdüsen 115 in der Vereinzelungseinrichtung 100 Luft zwischen das oben liegende plattenförmige Bauteil S2 und ein darunterliegendes plattenförmiges Bauteil S2 oder S1 geblasen. Die Anordnung der Luftdüsen 115 ist in Fig. 3 dargestellt.

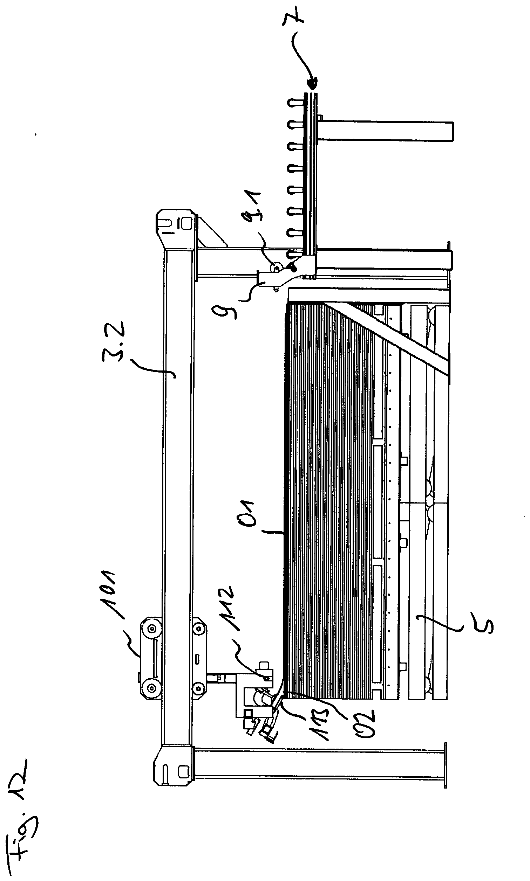

In Fig. 12 ist die Andruckrolle 113 ausgefahren und setzt auf einer Oberseite O2 des unter dem oben liegenden plattenförmigen Bauteil S1 liegenden plattenförmigen Bauteils S1 oder S2 auf.

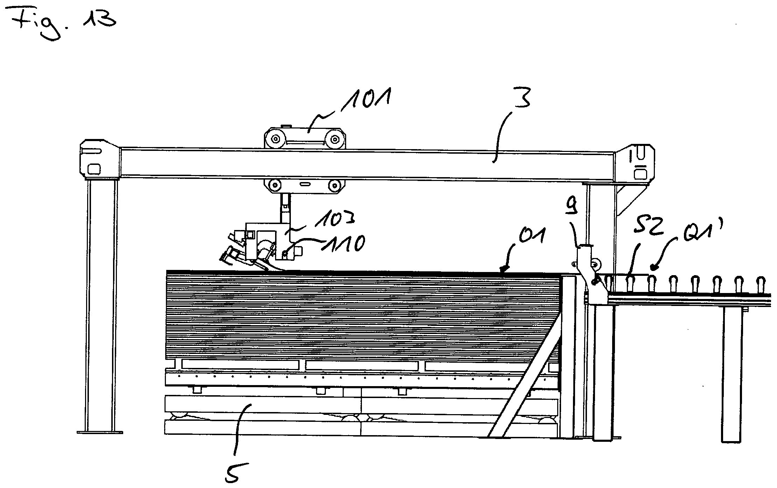

In Fig. 13 ist eine der Situation in Fig. 12 nachfolgende Situation dargestellt, in der die Vereinzelungseinrichtung 100 durch die Steuereinrichtung in x-Richtung bewegt wird und das oben liegende plattenförmige Bauteil S2 einzeln durch die Einzugswalze 9 mit Andruckwalzen 9.1 auf die Fördereinrichtung 7 schiebt.

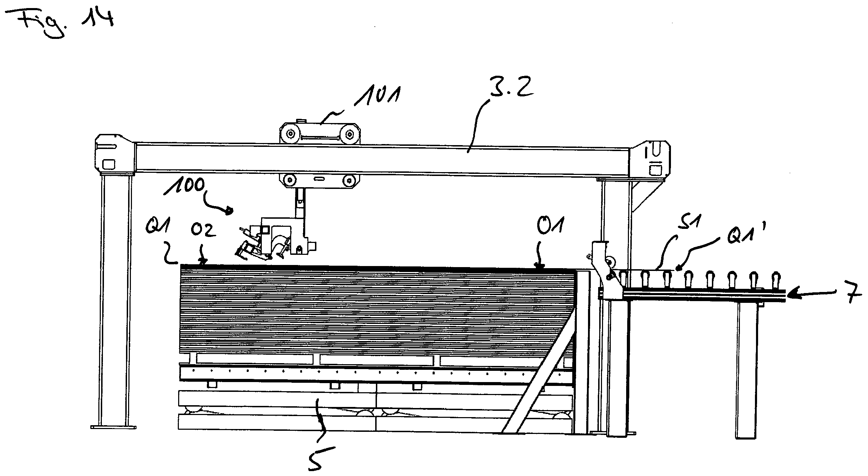

Nach der in Fig. 13 dargestellten Situation steuert die Steuereinrichtung das zweite Vereinzelungsmittel 109 derart, dass sich dieses anhebt (Fig. 14) und wieder zurück in die in Fig. 7 dargestellte Position bewegt, wenn ein plattenförmiges Bauteil S2 als nächstes vereinzelt werden soll.

Mit der erfindungsgemäßen Vorrichtung 1 können nicht nur sortenreine Stapel S verarbeitet werden, sondern Stapel S mit Wechselfolgen aus plattenförmigen Bauteilen S1 und plattenförmigen Bauteilen S2. Die Steuereinrichtung kann so programmiert sein, dass diese erkennt, welches Vereinzelungsmittel 104 oder 109 der Vereinzelungseinrichtung 100 angesteuert werden muss, um das oben liegende plattenförmige Bauteil S1, S2 entsprechend seiner besonderen Eigenschaft vom Stapel S zu vereinzeln.

### Bezugszeichenliste

- 1: Vorrichtung
- 3: mehrachsiges Handhabungsgerät
- 3.1: Längsbalken
- 3.2: Längsbalken
- 3.3: Querbalken
- 3.4: Querbalken
- 5: Hubeinrichtung
- 7: Fördereinrichtung
- 9: Einzugswalze
- 9.1: Andruckwalzen
- 100: Vereinzelungseinrichtung
- 101: ersten Schlitten
- 102: zweiten Schlitten
- 103: Trägereinrichtung
- 104: erste Vereinzelungsmittel
- 105: Abschiebekante
- 106: erste Schwenkachse
- 107: Aufsetzschuh
- 108: Stützelement
- 109: zweite Vereinzelungsmittel
- 110: zweite Schwenkachse
- 111: Greifeinrichtung
- 112: Anschlagkante
- 113: Andruckrolle
- 115: Luftdüse
- K: Kantenbereich
- O1: Oberseite
- O2: Oberseite
- Q1: erste Querkante
- Q1': zweite Querkante
- S: Stapel
- S1: plattenförmige Bauteile
- S2: plattenförmige Bauteile
- T: Trennkante

## Patentansprüche

1. Vorrichtung (1) zum Bearbeiten eines Stapels (S) mit plattenförmigen Bauteilen (S1; S2), mit einer Vereinzelungseinrichtung (100), mit der ein plattenförmiges Bauteil (S1; S2) von dem Stapel (S) abgenommen werden kann, wobei die Vereinzelungseinrichtung (100) als Vereinzelungstraverse ausgebildet ist, die an einem mehrachsigen Handhabungsgerät (3) in wenigstens zwei Richtungen (x, z) beweglich montiert ist und eine Mehrzahl von Vereinzelungsmitteln (104; 109) aufweist, mit einer Hubeinrichtung (5) zum Heben des Stapels (S) und mit einer Steuereinrichtung zur Steuerung der Vereinzelungseinrichtung (100) und der Hubeinrichtung (5),
wobei die Mehrzahl von Vereinzelungsmitteln (104; 109) wenigstens ein erstes Vereinzelungsmittel (104) und wenigstens ein zweites Vereinzelungsmittel (109) aufweist, die unterschiedlich zueinander sind, **dadurch gekennzeichnet, dass** die Steuereinrichtung das wenigstens eine erste Vereinzelungsmittel (104) ansteuert, wenn ein im Stapel (S) obenliegendes erstes plattenförmiges Bauteil (S1) mit einer vorbestimmten ersten Eigenschaft vereinzelt werden soll, und das wenigstens eine zweite Vereinzelungsmittel (109) ansteuert, wenn ein im Stapel (S) obenliegendes erstes plattenförmiges Bauteils (S2) mit einer vorbestimmten zweiten Eigenschaft vereinzelt werden soll, wobei sich die vorbestimmte zweite Eigenschaft von der vorbestimmten ersten Eigenschaft unterscheidet.

2. Vorrichtung nach Anspruch 1,
**dadurch gekennzeichnet,**
**dass** das wenigstens eine erste Vereinzelungsmittel (104) eine Abschiebeeinheit ist, die an der Vereinzelungseinrichtung (100) absenkbar gelagert ist und eine Abschiebekante (105) aufweist, die in einer Arbeitsposition an einer ersten Querkante (Q1) des zu vereinzelnden obenliegenden ersten plattenförmigen Bauteils (S1) mit erster Eigenschaft anliegt.

3. Vorrichtung nach Anspruch 2,
**dadurch gekennzeichnet,**
**dass** das wenigstens eine erste Vereinzelungsmittel (104) in der Arbeitsposition vertikal federnd gelagert ist.

4. Vorrichtung nach einem der Ansprüche 1 bis 3,
**dadurch gekennzeichnet,**
**dass** das wenigstens eine erste Vereinzelungsmittel (104) einen Aufsetzschuh (107) aufweist, der in der Arbeitsposition auf einer Oberseite (O1) des zu vereinzelnden obenliegenden ersten plattenförmigen Bauteils (S1) aufliegt.

5. Vorrichtung nach einem der Ansprüche 1 bis 4,
**dadurch gekennzeichnet,**
**dass** eine Trennkante (T) an einer zweiten Querkante (Q1') des zu vereinzelnden obenliegenden ersten plattenförmigen Bauteils (S1) angeordnet ist, wobei die Steuereinrichtung die Hubeinrichtung (5) derart steuert, dass sich der Stapel (S) in Bezug zur Trennkante (T) nach oben verschiebt und die Trennkante (T) beim Vereinzelungsvorgang unterhalb der zweiten Querkante (Q') des zu vereinzelnden obenliegenden ersten plattenförmigen Bauteils (S1) befindet.

6. Vorrichtung nach einem der Ansprüche 1 bis 5,
**dadurch gekennzeichnet,**
**dass** das wenigstens eine zweite Vereinzelungsmittel (109) eine Abschiebeeinheit ist, die an der Vereinzelungseinrichtung (100) absenkbar gelagert ist und eine Greifeinrichtung (111) aufweist, die in einer Arbeitsposition an einen Kantenbereich (K1) einer Oberseite (O1) des zu vereinzelnden obenliegenden ersten plattenförmigen Bauteils (S2) mit zweiter Eigenschaft in der Nähe einer ersten Querkante (Q1) angreift.

7. Vorrichtung nach Anspruch 6,
**dadurch gekennzeichnet,**
**dass** die Greifeinrichtung (111) beweglich zwischen einer ersten Greifstellung und einer zweiten Greifstellung angeordnet ist.

8. Vorrichtung nach Anspruch 7,
**dadurch gekennzeichnet,**
**dass** das wenigstens eine zweite Vereinzelungsmittel (109) eine Anschlagkante (112) aufweist, an welche die erste Querkante (Q1) des zu vereinzelnden obenliegenden ersten plattenförmigen Bauteils (S2) anschlagen kann.

9. Vorrichtung nach Anspruch 8,
**dadurch gekennzeichnet,**
**dass** die Greifeinrichtung (111) in der ersten Greifstellung an den Bereich des zu vereinzelnden obenliegenden ersten plattenförmigen Bauteils (S2) angreift und sich in die zweite Greifstellung bewegt, wenn die Anschlagkante (112) an der ersten Querkante (Q1) anliegt.

10. Vorrichtung nach Anspruch 8 oder 9,
**dadurch gekennzeichnet,**
**dass** in der Anschlagkante (112) wenigstens eine Luftdüse (115) zur Abgabe von Luft zwischen das obenliegende erste plattenförmige Bauteil (S2) und das darunterliegende zweite plattenförmige Bauteil (S2) eingebaut ist.

11. Vorrichtung nach einem der Ansprüche 7 bis 10,
**dadurch gekennzeichnet,**
**dass** das wenigstens eine zweite Vereinzelungsmittel (109) eine Andruckrolle (113) aufweist, die an ein unter dem zu vereinzelnden obenliegenden ersten plattenförmigen Bauteil (S1; S2) liegendes und nicht zu vereinzelndes zweites plattenförmiges Bauteil (S1; S2) drückt, wenn die Greifeinrichtung (111) an die Oberseite (O1) des zu vereinzelnden obenliegenden ersten plattenförmigen Bauteils (S2) angreift und sich in der zweiten Greifstellung befindet.

## Claims

1. Device (1) for machining a stack (S) with plate-shaped components (S1; S2), with a separation device (100), using which a plate-shaped component (S1; S2) can be removed from the stack (S), wherein the separation device (100) is designed as a separating transverse, which is moveably mounted on a multi-axis handling device (3) in at least two directions (x, z) and comprises a plurality of separation means (104; 109), with a lifting device (5) for lifting the stack (S) and with a control device for controlling the separation device (100) and the lifting device (5),
wherein the plurality of the separation means (104; 109) comprise at least one first separation means (104) and at least one second separation means (109), which are different to each other, **characterized in that** the control device, which controls at least one first separation means (104) if a first above-lying plate-shaped component (S1) in the stack (S) with a predetermined first characteristic is to be separated, and which controls at least one second separation means (109) if a first above-lying plate-shaped component (S2) in the stack (S) with a predetermined second characteristic is to be separated, wherein the predetermined second characteristic is different from the predetermined first characteristic.

2. Device according to Claim 1,
**characterized in that**
the at least one first separation means (104) is a push-off unit, which is mounted on the separation device (100) so it can be lowered and a and comprises a push-off edge (105) which rests, in an operating position, on a first transverse edge (Q1) of the first above-lying plate-shaped component (S1) with a first characteristic.

3. Device according to Claim 2,
**characterized in that**
at least one first separation means (104) is mounted in a vertically resilient manner in the operating position.

4. Device according to any of the Claims 1 to 3,
**characterized in that**
at least one first separation means (104) comprises a mounting shoe (107), which rests, in the operating position, on a top side (O1) of the above-lying first plate-shaped component (S1).

5. Device according to any of the Claims 1 to 4,
**characterized in that**
a separating edge (T) is arranged on a second transverse edge (Q1') of the above-lying first plate-shaped component (S1), wherein the control device controls the lifting device (5) in such a way that the stack (S) moves upwards in relation to the separating edge (T) and the separating edge (T) is located below the second transverse edge (Q') of the first above-lying plate-shaped component (S1) to be separated during the separation process.

6. Device according to any one of Claims 1 to 5,
**characterized in that**
at least one second separation means (109) is a push-off unit, which is mounted on the separation device (100) so that it can be lowered and comprises a gripping device (111) which engages, in an operating position, onto an edge region (K1) of a top side (O1) of the above-lying first plate-shaped component (S2) with a second characteristic near a first transverse edge (Q1) .

7. Device according to claim 6,
**characterized in that**
the gripping device (111) is moveably arranged between a first gripping position and a second gripping position.

8. Device according to claim 7,
**characterized in that**
at least one second separation means (109) comprises an abutment edge (112), onto which the first transverse edge (Q1) of the above-lying first plate-shaped component (S2) can abut.

9. Device according to Claim 8,
**characterized in that**
the gripping device (111) in the first gripping position engages onto region of the above-lying first plate-shaped component (S2) to be separated and moves into the second gripping position when the abutment edge (112) rests on the first transverse edge (Q1).

10. Device according to Claim 8 or 9,
**characterized in that**
at least one air nozzle (115) for dispensing air between the above-lying first plate-shaped component (S2) and the underlying second plate-shaped component (S2) is installed within the abutment edge (112).

11. Device according to any one of Claims 7 to 10,
**characterized in that**
at least one second separation means (109) comprises a pressure roller (113), which presses onto a second plate-shaped component (S1, S2) lying under the above-lying first plate-shaped component (S1, S2), which is not to be separated, if the gripping device (111) engages onto the top side (O1) of the above-lying first plate-shaped component (S2) and is located in the second gripping position.

## Revendications

1. Dispositif (1), destiné à traiter une pile (S) d'élément constitutifs (S1 ; S2) en forme de plaques, pourvu d'un système de désolidarisation (100), à l'aide duquel un élément constitutif (S1 ; S2) en forme de plaque peut être retiré de la pile (S), le système de désolidarisation (100) étant constitué sous la forme d'une traverse de désolidarisation, qui est montée sur un appareil de manipulation (3) multiaxes en étant mobile dans au moins deux directions (x, z) et qui comporte une multiplicité de moyens de désolidarisation (104 ; 109), pourvu d'un système de levage (5) destiné à lever la pile (S) et pourvu d'un système de commande, destiné à commander le système de désolidarisation (100) et le système de levage (5), la multiplicité de moyens de désolidarisation (104 ; 109) comportant au moins un premier moyen de désolidarisation (104) et au moins un deuxième moyen de désolidarisation (109) qui sont différents l'un de l'autre, **caractérisé en ce que** le système de commande active l'au moins un premier moyen de désolidarisation (104) lorsqu'un premier élément constitutif (S1) en forme de plaque situé sur le dessus dans la pile (S), doté d'une première propriété prédéfinie doit être désolidarisé, et active l'au moins un deuxième moyen de désolidarisation (109) lorsqu'un premier élément constitutif (S2) en forme de plaque situé sur le dessus dans la pile (S), doté d'une deuxième propriété prédéfinie doit être désolidarisé, la deuxième propriété prédéfinie se différenciant de la première propriété prédéfinie.

2. Dispositif selon la revendication 1,
**caractérisé**
**en ce que** l'au moins un premier moyen de désolidarisation (104) est une unité d'évacuation latérale, qui est logée en étant abaissable sur le système de désolidarisation (100) et qui comporte une arête d'évacuation latérale (105), qui dans une position de travail est adjacente à une première arête transversale (Q1) du premier élément constitutif (S1) en forme de plaque situé sur le dessus, doté de la première propriété.

3. Dispositif selon la revendication 2,
**caractérisé**
**en ce que** dans la position de travail, l'au moins un premier moyen de désolidarisation (104) est logé en étant résilient en direction verticale.

4. Dispositif selon l'une quelconque des revendications 1 à 3,
**caractérisé**
**en ce que** l'au moins un premier moyen de désolidarisation (104) comporte un sabot de support (107), qui dans la position de travail repose sur une face supérieure (O1) du premier élément constitutif (S1) en forme de plaque situé sur le dessus qui doit être désolidarisé.

5. Dispositif selon l'une quelconque des revendications l à 4,
**caractérisé**
**en ce qu'**une arête de séparation (T) est placée sur une deuxième arête transversale (Q1') du premier élément constitutif (S1) en forme de plaque situé sur le dessus qui doit être désolidarisé, le système de commande commandant le système de levage (5) de sorte que la pile (S) se déplace vers le haut par rapport à l'arête de séparation (T) et que lors du processus de désolidarisation, l'arête de séparation (T) se trouve en-dessous de la deuxième arête transversale (Q') du premier élément constitutif (S1) en forme de plaque situé sur le dessus qui doit être désolidarisé.

6. Dispositif selon l'une quelconque des revendications l à 5,
**caractérisé**
**en ce que** l'au moins un deuxième moyen de désolidarisation (109) est une unité d'évacuation latérale, qui est logée en étant abaissable sur le système de désolidarisation (100) et qui comporte un système de préhension (111), qui dans une position de travail s'engage sur une zone d'arête (K1) d'une face supérieure (O1) du premier élément constitutif (S2) en forme de plaque situé sur le dessus qui doit être désolidarisé, doté de la deuxième propriété, à proximité d'une première arête transversale (Q1).

7. Dispositif selon la revendication 6,
**caractérisé**
**en ce que** le système de préhension (111) est placé en étant mobile entre une première position de préhension et une deuxième position de préhension.

8. Dispositif selon la revendication 7,
**caractérisé**
**en ce que** l'au moins un deuxième moyen de désolidarisation (109) comporte une arête de butée (112), sur laquelle la première arête transversale (Q1) du premier élément constitutif (S2) en forme de plaque situé sur le dessus qui doit être désolidarisé peut buter.

9. Dispositif selon la revendication 8,
**caractérisé**
**en ce que** dans la première position de préhension, le système de préhension (111) s'engage sur la zone du premier élément constitutif (S2) en forme de plaque situé sur le dessus qui doit être désolidarisé et se déplace dans la deuxième position de préhension, lorsque l'arête de butée (112) est adjacente à la première arête transversale (Q1).

10. Dispositif selon la revendication 8 ou 9,
**caractérisé**
**en ce que** dans l'arête de butée (112) est intégrée au moins une buse d'air (115) destinée à distribuer de l'air entre le premier élément constitutif (S2) en forme de plaque situé sur le dessus et le deuxième élément constitutif (S2) en forme de plaque sous-jacent.

11. Dispositif selon l'une quelconque des revendications 7 à 10,
**caractérisé**
**en ce que** l'au moins un deuxième moyen de désolidarisation (109) comporte un galet presseur (113), qui appuie sur un deuxième élément constitutif (S1 ; S2) en forme de plaque, qui ne doit pas être désolidarisé, situé sur le premier élément constitutif (S1 ; S2) en forme de plaque situé sur le dessus qui doit être désolidarisé, lorsque le système de préhension (111) s'engage sur la face supérieure (O1) du premier élément constitutif (S2) en forme de plaque situé sur le dessus qui doit être désolidarisé et se trouve dans la deuxième position de préhension.
